# EUROPEAN PATENT APPLICATION

(11) **EP 4 060 916 A1**
(43) Date of publication of application: **21.09.2022**
(21) Application number: 19955028.6
(22) Date of filing: 06.12.2019
(51) Int. Cl.: H04L 1/00

(54) **FREQUENCY ADJUSTMENT METHOD AND COMMUNICATION APPARATUS**

(71) Applicant: Huawei Technologies Co., Ltd., Shenzhen, Guangdong 518129 (CN)
(72) Inventor: XU, Mingtao, Shenzhen, Guangdong 518129 (CN); GAO, Quanzhong, Shenzhen, Guangdong 518129 (CN); XU, Heng, Shenzhen, Guangdong 518129 (CN); ZENG, Yu, Shenzhen, Guangdong 518129 (CN)
(74) Representative: Goddar, Heinz J.
(86) International application number: PCT/CN2019/123771
(87) International publication number: WO 2021/109147

(57) **Abstract**

Embodiments of this application relate to the communication field, and provide a frequency adjustment method and a communication apparatus. The method includes: A communication apparatus sends a first downlink signal to a terminal device via a first transmission reception point TRP; receives an uplink signal from the terminal device via the first TRP, where a receive frequency of the uplink signal at the first TRP is a first receive frequency; receives an uplink signal from the terminal device via a second TRP, where a receive frequency of the uplink signal at the second TRP is a second receive frequency; sends a second downlink signal to the terminal device via the second TRP; and sends a third downlink signal to the terminal device via the first TRP, where a difference obtained by subtracting a transmit frequency of the third downlink signal at the first TRP from a transmit frequency of the second downlink signal at the second TRP is equal to △f/k, △f is equal to a difference obtained by subtracting the second receive frequency from the first receive frequency, and k is a ratio of an uplink center frequency to a downlink center frequency.

## Description

### TECHNICAL FIELD

Embodiments of this application relates to the communication field, and in particular, to a frequency adjustment method and a communication apparatus.

### BACKGROUND

In a fast-movement scenario of a terminal device such as a high-speed train or a train, if the terminal device frequently performs cell handover, communication performance is greatly degraded. To reduce a quantity of cell handovers caused by high-speed movement of the terminal device, cell combination may be performed. To be specific, coverage areas of two neighboring transmission reception points (transmission reception point, TRP) are combined into a same cell.

In cell combination networking, both two neighboring TRPs send downlink reference signals. For the terminal device, reference signals from different TRPs are superimposed and interfered with each other on an air interface. The terminal device may determine, based on receive frequencies of signals, a frequency offset of the superimposed signals, but cannot obtain an accurate downlink frequency offset between the terminal device and a specific TRP. The terminal device may further perform frequency locking based on the obtained frequency offset and then send an uplink signal, so that the TRPs cannot obtain an accurate uplink frequency offset, and further cannot perform pre-correction accurately. This greatly affects transmission of uplink and downlink data, for example, increases a loss rate of data packets.

### SUMMARY

Embodiments of this application provide a frequency adjustment method and a communication apparatus, to implement accurate pre-correction on a network side, and reduce pilot overheads while ensuring uplink and downlink transmission performance.

According to a first aspect, a signal frequency adjustment method is provided, and is applied to a communication apparatus. The communication apparatus may be a base station, including a BBU and an RRU. A first TRP and a second TRP share the BBU of the base station. To be specific, the first TRP and the second TRP are two different transmission reception points of the base station. The method includes: The communication apparatus sends a first downlink signal to a terminal device via the first transmission reception point TRP; receives an uplink signal from the terminal device via the first TRP, where a receive frequency of the uplink signal at the first TRP is a first receive frequency, and a transmit frequency of the uplink signal at the terminal device is determined based on a receive frequency of the first downlink signal at the terminal device; and may receive the uplink signal from the terminal device via the second TRP, where a receive frequency of the uplink signal at the second TRP is a second receive frequency. The communication apparatus sends a second downlink signal to the terminal device via the second TRP; and sends a third downlink signal to the terminal device via the first TRP, where a difference obtained by subtracting a transmit frequency of the third downlink signal at the first TRP from a transmit frequency of the second downlink signal at the second TRP is equal to Δf/k. Δf is equal to a difference obtained by subtracting the second receive frequency from the first receive frequency. k is a ratio of an uplink center frequency to a downlink center frequency.

In the method provided in this embodiment of this application, a TRS is sent via only one TRP, to prevent TRSs from different TRPs from being superimposed with each other at the terminal device. In this way, an accurate frequency offset can be obtained. Compared with a prior-art solution in which two TRPs send TRSs to correct a frequency offset, the method provided in this embodiment of this application reduces pilot overheads while ensuring normal communication of the terminal device. In addition, in the foregoing method, user-level frequency locking is implemented based on a receive frequency of a single TRS at the terminal device, so as to avoid frequency locking chaos caused by receiving two TRSs at the terminal device. A downlink transmit frequency of a cooperating TRP is modified based on a difference between a receive frequency of an uplink signal of the terminal device at a serving TRP and a receive frequency of an uplink signal of the terminal device at the cooperating TRP, so that a receive frequency of a downlink signal from the serving TRP at the terminal device is the same as a receive frequency of a downlink signal from the cooperating TRP at the terminal device, to implement user-level pre-correction. This can ensure communication performance between the terminal device and each of the two TRPs.

With reference to the first aspect, in a first possible implementation of the first aspect, the transmit frequency of the third downlink signal at the first TRP is equal to a transmit frequency of the first downlink signal at the first TRP

In the method provided in this embodiment of this application, when pre-correction is performed on a network side, a transmit frequency of a downlink signal only at the second TRP may be adjusted while a transmit frequency of a downlink signal at the first TRP does not need to be adjusted. This reduces processing load on the network side. In addition, the transmit frequency of the downlink signal at the second TRP is adjusted based on the transmit frequency of the downlink signal at the first TRP. The terminal device may receive the downlink signal from the first TRP and the downlink signal from the second TRP based on a frequency for frequency locking performed after receiving the first downlink signal, without a need to perform frequency locking again to adjust a receive frequency. This reduces the processing load of the terminal device.

With reference to the first possible implementation of the first aspect, in a second possible implementation of the first aspect, the method further includes: determining the transmit frequency of the second downlink signal at the second TRP based on the difference obtained by subtracting the second receive frequency from the first receive frequency.

In the method provided in this embodiment of this application, when the transmit frequency of the downlink signal only at the second TRP is adjusted, the transmit frequency of the downlink signal at the second TRP is adjusted based on the transmit frequency of the downlink signal at the first TRP, so that the difference obtained by subtracting the transmit frequency of the third downlink signal at the first TRP from the transmit frequency of the second downlink signal at the second TRP is equal to △f/k.

With reference to the first or the second possible implementation of the first aspect, in a third possible implementation of the first aspect, both the transmit frequency of the first downlink signal at the first TRP and the transmit frequency of the third downlink signal at the first TRP are f, and the transmit frequency of the second downlink signal at the second TRP is f+△f/k.

In the method provided in this embodiment of this application, the transmit frequency of the downlink signal at the first TRP is not adjusted, and may be a communication frequency f negotiated between the network side and the terminal device.

With reference to the third possible implementation of the first aspect, in a fourth possible implementation of the first aspect, △f/k is sent to the second TRP, so that a transmit frequency of the third downlink signal at the second TRP is f+△f/k.

In the method provided in this embodiment of this application, k is a preconfigured parameter, and represents a ratio of an uplink center frequency to a downlink center frequency. After determining △f, the communication apparatus (for example, the BBU) may further determine △f/k, and send △f/k to the second TRP (including the RRU), so that the RRU sends the third downlink signal on the frequency (f+△f/k) via an antenna.

With reference to the first aspect or the first to the fourth possible implementations of the first aspect, in a fifth possible implementation of the first aspect, that the communication apparatus sends a third downlink signal to the terminal device via the first TRP includes: The communication apparatus sends a third baseband signal to the first TRP, where the third baseband signal is used by the first TRP to send the third downlink signal to the terminal device. That the communication apparatus sends a second downlink signal to the terminal device via the second TRP includes: The communication apparatus sends a second baseband signal to the second TRP, where the second baseband signal is used by the second TRP to send the second downlink signal to the terminal device, and a difference obtained by subtracting a transmit frequency of the third baseband signal from a transmit frequency of the second baseband signal is equal to △f/k.

In the method provided in this embodiment of this application, the BBU may adjust a transmit frequency of a baseband signal based on the difference between the first receive frequency and the second receive frequency, and send the baseband signal to the RRU. The RRU converts the baseband signal into a downlink signal and sends the downlink signal, so that the difference obtained by subtracting the transmit frequency of the third downlink signal at the first TRP from the transmit frequency of the second downlink signal at the second TRP is equal to △f/k.

With reference to the first aspect, in a sixth possible implementation of the first aspect, the transmit frequency of the first downlink signal at the first TRP is f, and the difference between the first receive frequency and the second receive frequency is △f₂; the transmit frequency of the third downlink signal is f+△f₁, and the transmit frequency of the second downlink signal is f+△f₁+△f₂, where △f₁ is a frequency adjustment factor. Optionally, the communication apparatus may adjust a transmit frequency of the first TRP and a transmit frequency of the second TRP when performing pre-correction based on the difference between the first receive frequency and the second receive frequency. Therefore, the transmit frequency of the third downlink signal at the first TRP is unequal to the transmit frequency of the first downlink signal at the first TRP

With reference to the sixth possible implementation of the first aspect, in a seventh possible implementation of the first aspect, the communication apparatus may further send △f₁ to the first TRP, so that the frequency on which the first TRP sends the third downlink signal is f+△f₁. The communication apparatus may further send △f₁+△f₂ to the second TRP, so that a frequency on which the second TRP sends the second downlink signal is f+△f₁+△f₂.

According to a second aspect, a communication apparatus is provided. The communication apparatus includes: a processing unit, configured to send a first downlink signal to a terminal device via a first transmission reception point TRP. The processing unit is further configured to: receive an uplink signal from the terminal device via the first TRP, where a receive frequency of the uplink signal at the first TRP is a first receive frequency; and receive the uplink signal from the terminal device via a second TRP, where a receive frequency of the uplink signal at the second TRP is a second receive frequency, and a transmit frequency of the uplink signal at the terminal device is determined based on a receive frequency of the first downlink signal at the terminal device. The processing unit is further configured to: send a second downlink signal to the terminal device via the second TRP, and send a third downlink signal to the terminal device via the first TRP, where a difference obtained by subtracting a transmit frequency of the third downlink signal at the first TRP from a transmit frequency of the second downlink signal at the second TRP is equal to △f/k, △f is equal to a difference obtained by subtracting the second receive frequency from the first receive frequency, and k is a ratio of an uplink center frequency to a downlink center frequency.

With reference to the second aspect, in a first possible implementation of the second aspect, the transmit frequency of the third downlink signal at the TRP is equal to a transmit frequency of the first downlink signal at the first TRP.

With reference to the first possible implementation of the first aspect, in a second possible implementation of the second aspect, the processing unit is further configured to determine the transmit frequency of the second downlink signal at the second TRP based on the difference obtained by subtracting the second receive frequency from the first receive frequency.

With reference to the first or the second possible implementation of the first aspect, in a third possible implementation of the second aspect, both the transmit frequency of the first downlink signal at the first TRP and the transmit frequency of the third downlink signal at the first TRP are f, the difference obtained by subtracting the second receive frequency from the first receive frequency is △f, and the transmit frequency of the second downlink signal at the second TRP is f+△f/k.

With reference to the third possible implementation of the first aspect, in a fourth possible implementation of the second aspect, the communication apparatus further includes a communication unit, and the communication unit is configured to send △f/k to the second TRP, so that a transmit frequency of the third downlink signal at the second TRP is f+△f/k.

With reference to the first aspect or the first to the fourth possible implementations of the first aspect, in a fifth possible implementation of the second aspect, the apparatus further includes the communication unit. The communication unit is specifically configured to: send a third baseband signal to the first TRP, where the third baseband signal is used by the first TRP to send the third downlink signal to the terminal device; and send a second baseband signal to the second TRP, where the second baseband signal is used by the second TRP to send the second downlink signal to the terminal device. A difference obtained by subtracting a transmit frequency of the third baseband signal from a transmit frequency of the second baseband signal is equal to △f/k.

According to a third aspect, a frequency adjustment method is provided. The method includes: A first communication apparatus sends a first downlink signal to a terminal device via a first TRP; and receives a first uplink signal from the terminal device via the first TRP, where a receive frequency of the first uplink signal at the first TRP is a first receive frequency.

The first communication apparatus may further send the first receive frequency to a second communication apparatus.

The first communication apparatus may further send a third downlink signal to the terminal device via the first TRP

The second communication apparatus receives the first uplink signal from the terminal device via a second TRP, where a receive frequency of the first uplink signal at the second TRP is a second receive frequency.

The second communication apparatus may further receive the first receive frequency from the first communication apparatus, and calculate a difference obtained by subtracting the second receive frequency from the first receive frequency.

The second communication apparatus may further send a third downlink signal to the terminal device.

A difference obtained by subtracting a transmit frequency of the third downlink signal at the first TRP from a transmit frequency of the second downlink signal at the second TRP is equal to △f/k. △f is equal to the difference obtained by subtracting the second receive frequency from the first receive frequency. k is a ratio of an uplink center frequency to a downlink center frequency.

According to a fourth aspect, a communication apparatus is provided. The communication apparatus includes at least one processor and a memory, where the at least one processor is coupled to the memory.

The memory is configured to store a computer program.

The at least one processor is configured to execute the computer program stored in the memory, so that the apparatus performs the method according to the first aspect or any one of the possible implementations of the first aspect.

According to a fifth aspect, a computer-readable storage medium is provided. The computer-readable storage medium stores a computer program or instructions. When the computer program or the instructions is or are run, the method according to the first aspect or any one of the possible implementations of the first aspect is implemented.

### BRIEF DESCRIPTION OF DRAWINGS

FIG. 1 is a schematic diagram of a communication system according to an embodiment of this application;
FIG. 2 is a schematic diagram of a structure of a network device according to an embodiment of this application;
FIG. 3 is a schematic diagram of combination networking according to an embodiment of this application;
FIG. 4 is another schematic diagram of combination networking according to an embodiment of this application;
FIG. 5 is a schematic diagram of correction according to an embodiment of this application;
FIG. 6 is a schematic diagram of pre-correction according to an embodiment of this application;
FIG. 7 is a schematic diagram of a frequency offset according to an embodiment of this application;
FIG. 8 is a block diagram of a structure of a communication apparatus according to an embodiment of this application;
FIG. 9 is a schematic flowchart of a frequency adjustment method according to an embodiment of this application;
FIG. 10 is another schematic flowchart of a frequency adjustment method according to an embodiment of this application;
FIG. 11 is another schematic flowchart of a frequency adjustment method according to an embodiment of this application;
FIG. 12 is another block diagram of a structure of a communication apparatus according to an embodiment of this application; and
FIG. 13 is another block diagram of a structure of a communication apparatus according to an embodiment of this application.

### DESCRIPTION OF EMBODIMENTS

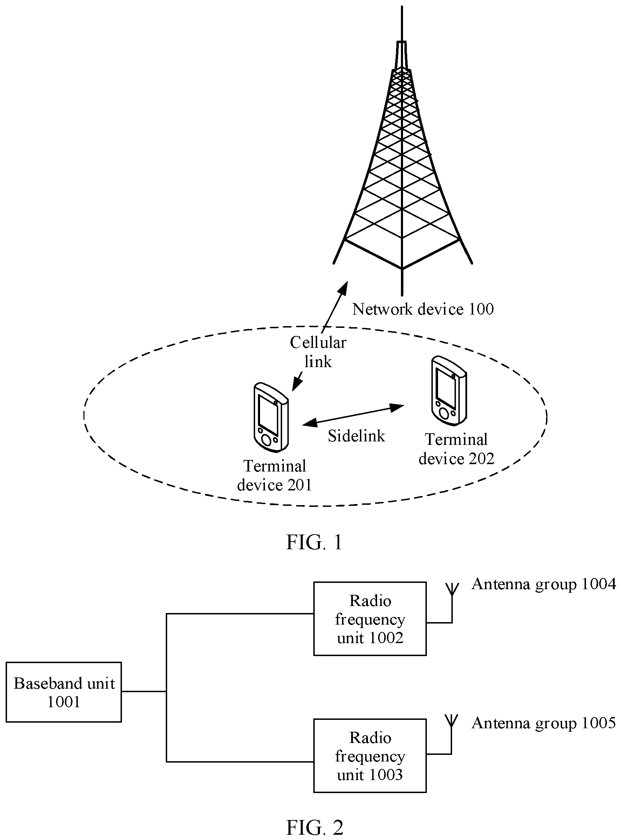

FIG. 1 is a schematic diagram of a communication system to which technical solutions provided in this application are applicable. The communication system may include a plurality of network devices (only a network device 100 is shown) and a plurality of terminal devices (only a terminal device 201 and a terminal device 202 are shown in the figure). FIG. 1 is merely a schematic diagram, and does not constitute any limitation on a scenario to which the technical solutions provided in this application are applicable.

A network device and a terminal device may communicate with each other via a cellular link (a Uu link). For example, the network device 100 and the terminal device 201 communicate with each other via a cellular link. Terminal devices may communicate with each other via a sidelink (sidelink). For example, the terminal device 201 and the terminal device 202 may communicate with each other via a sidelink, where sidelink communication may include D2D communication, V2X communication, machine type communication (machine type communication, MTC), or the like.

The network device 100 may be any device with a wireless transceiver function. The network device includes but is not limited to: an evolved NodeB (NodeB or eNB or e-NodeB, evolved Node B) in LTE, a base station (gNodeB or gNB) or a transmission reception point (transmission receiving point/transmission reception point, TRP) in NR, a base station that subsequently evolves in 3GPP, an access node in a Wi-Fi system, a wireless relay node, a wireless backhaul node, or the like. The base station may be a macro base station, a micro base station, a picocell base station, a small cell, a relay station, a balloon station, or the like. A plurality of base stations may support networks using a same technology mentioned above, or may support networks using different technologies mentioned above. The base station may include one or more co-site or non-co-site TRPs. The network device may alternatively be a radio controller, a centralized unit (centralized unit, CU), and/or a distributed unit (distributed unit, DU) in a cloud radio access network (cloud radio access network, CRAN) scenario. The network device may alternatively be a server, a wearable device, a vehicle-mounted device, or the like. An example in which the network device is a base station is used for description below. The plurality of network devices may be base stations of a same type or base stations of different types. The base station may communicate with a terminal device, or may communicate with a terminal device via a relay station. The terminal device may communicate with a plurality of base stations using different technologies. For example, the terminal device may communicate with a base station supporting an LTE network, may communicate with a base station supporting a 5G network, and may further support dual connectivity to a base station in an LTE network and a base station in a 5G network.

The terminal device (for example, the terminal device 201 or the terminal device 202) is a device having a wireless transceiver function, and may be deployed on land, including an indoor device or an outdoor device, a handheld device, a wearable device, or a vehicle-mounted device, or may be deployed on water (for example, on a ship), or may be deployed in the air (for example, on an airplane, a balloon, or a satellite). The terminal may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a vehicle-mounted terminal device, a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable terminal device, or the like. An application scenario is not limited in embodiments of this application. The terminal sometimes may also be referred to as a terminal device, user equipment (user equipment, UE), an access terminal device, a vehicle-mounted terminal, an industrial control terminal, a UE unit, a UE station, a mobile site, a mobile station, a remote station, a remote terminal device, a mobile device, a UE terminal device, a terminal device, a wireless communication device, a UE agent, a UE apparatus, or the like. The terminal may be fixed or mobile. The terminal device in this application may alternatively be a vehicle-mounted module, a vehicle-mounted module assembly, a vehicle-mounted component, a vehicle-mounted chip, or a vehicle-mounted unit with which a vehicle is equipped as one or more components or units. The vehicle may use the built-in vehicle-mounted module, the vehicle-mounted module assembly, the vehicle-mounted component, the vehicle-mounted chip, or the vehicle-mounted unit to implement the method in this application.

FIG. 2 is a schematic diagram of a structure of a network device 100 according to an embodiment of this application. The network device may be a distributed base station. As shown in FIG. 2, the network device 100 may include a baseband unit (baseband unit, BBU), radio frequency units such as a remote radio unit (remote radio unit, RRU), and antenna groups. The RRU may be a pico RRU (pico RRU, pRRU), and the baseband unit may also be referred to as a baseband unit. Specifically, each BBU may be connected to at least one RRU via optical fibers, and the RRU may be connected to an antenna. For example, in FIG. 2, the network device 100 includes a baseband unit 1001, a radio frequency unit 1002, a radio frequency unit 1003, an antenna group 1004, and an antenna group 1005. The baseband unit 1001 is connected to the radio frequency unit 1002. The baseband unit 1001 is connected to the radio frequency unit 1003. The radio frequency unit 1002 is connected to the antenna group 1004. The radio frequency unit 1003 is connected to the antenna group 1005.

The baseband unit is responsible for baseband processing, to generate a digital signal, for example, a digital baseband signal or a digital intermediate frequency signal.

The radio frequency units are mainly configured to implement conversion between a digital signal and a radio frequency signal, to send and receive signals. For example, the radio frequency units receive a digital signal from the baseband unit, process the digital signal to obtain a radio frequency signal, and send the radio frequency signal.

The network device may include one or more TRPs. For example, the network device 100 includes a TRP 200 and a TRP 300.

A TRP may be understood as an entity that implements receiving and sending functions, and may provide cell coverage for an area or in a direction, to provide a communication service for a terminal in the area or the direction. Different TRPs may serve in different areas or directions.

In an implementation, a TRP may be a physical entity.

Optionally, in this implementation, the one or more TRPs may share a hardware facility of the network device.

Optionally, a TRP includes a baseband unit, a radio frequency unit, and an antenna group. For example, the TRP 200 includes a baseband unit 1001, a radio frequency unit 1002, and an antenna group 1003. The TRP 300 includes the baseband unit 1001, a radio frequency unit 1003, and an antenna group 1004. The TRP 200 and the TRP 300 share the baseband unit 1001. Alternatively, for example, the radio frequency unit 1003 may be connected to two antenna groups. The TRP 200 and the TRP 300 each may include a baseband unit 1001 and a radio frequency unit 1003. The TRP 200 and the TRP 300 each further include an antenna.

Optionally, the TRP includes a radio frequency unit and an antenna group. For example, the TRP 200 includes a radio frequency unit 1002 and an antenna group 1003. The TRP 300 includes a radio frequency unit 1003 and an antenna group 1004. Both the TRP 200 and the TRP 300 are connected to the baseband unit 1001. Alternatively, for example, the radio frequency unit 1003 may be connected to two antenna groups. Both the TRP 200 and the TRP 300 may include the radio frequency unit 1003. The TRP 200 and the TRP 300 each further include an antenna.

Optionally, the TRP includes an antenna group. For example, the TRP 200 includes an antenna group 1003, and the TRP 300 includes an antenna group 1004.

In another implementation, the TRP may be a logical entity. This is not limited in embodiments of this application.

The method provided in embodiments of this application may be applied to cell combination networking. Cell combination may be understood as combining coverage areas of a plurality of different RRUs. A combined area logically belongs to a same cell. In this way, a quantity of cells may be reduced. When a terminal device moves at a high speed, a quantity of cell handovers can be reduced, and system performance can be improved.

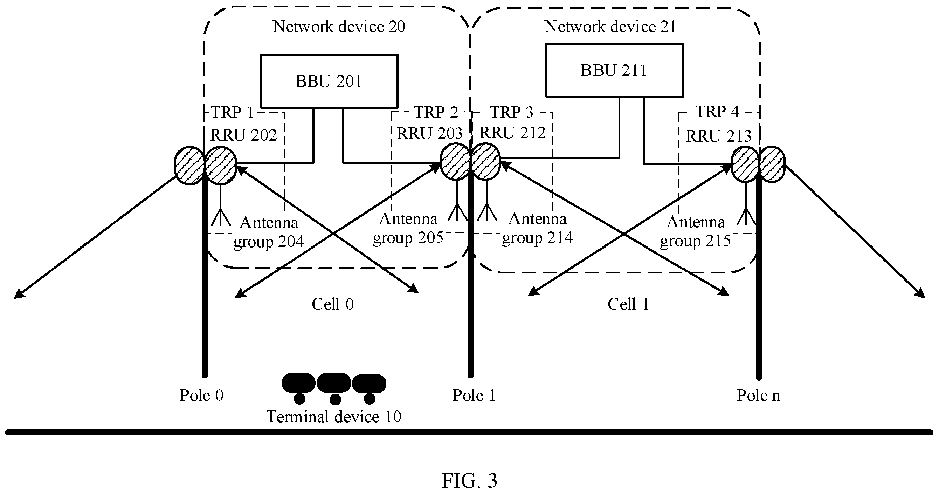

FIG. 3 is a schematic diagram of cell combination networking. Refer to FIG. 3. The networking may include a terminal device and network devices. A network device 20 and a network device 21 may be distributed base stations. The network device 20 includes a BBU 201, an RRU 202, an RRU 203, an antenna group 204, and an antenna group 205. The RRU 202 and the antenna group 204 may form a TRP 1, and the RRU 203 and the antenna group 205 may form a TRP 2. The network device 21 includes a BBU 211, an RRU 212, an RRU 213, an antenna group 214, and an antenna group 215. The RRU 212 and the antenna group 214 may form a TRP 3, and the RRU 213 and the antenna group 215 may form a TRP 4.

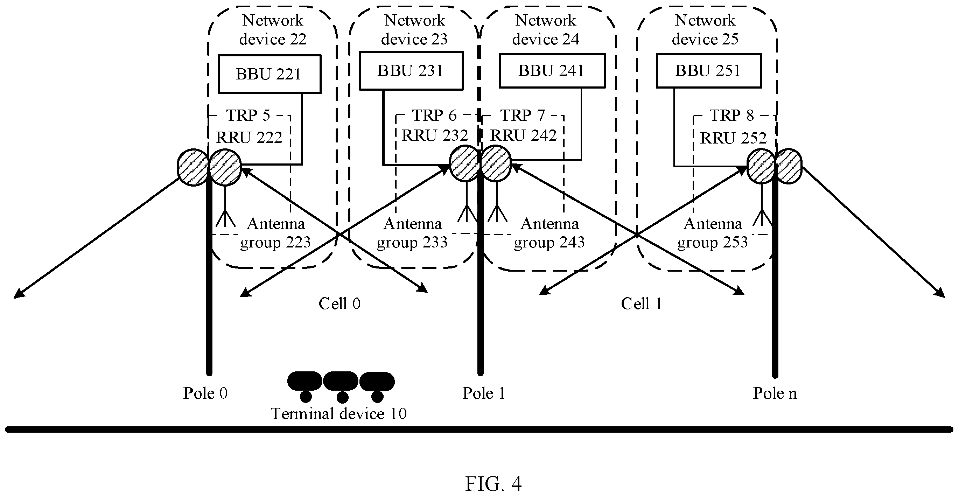

In a networking manner, coverage areas of RRUs combined into a same logical cell are connected (connected) to a same BBU. For example, refer to FIG. 4. Coverage areas of the RRU 202 and the RRU 203 may be combined into a same logical cell (cell 0), and coverage areas of the RRU 212 and the RRU 213 may be combined into a same logical cell (cell 1).

In another networking manner, coverage areas of RRUs combined into a same logical cell are connected to different BBUs. For example, refer to FIG. 4. A network device 22 includes a BBU 221, an RRU 222, and an antenna group 223, and the RRU 222 and the antenna group 223 may form a TRP 5. A network device 24 includes a BBU 241, an RRU 242, and an antenna group 243, and the RRU 242 and the antenna group 243 may form a TRP 6. A network device 25 includes a BBU 251, an RRU 252, and an antenna group 253, and the RRU 252 and the antenna group 253 may form a TRP 7. A network device 26 includes a BBU 261, an RRU 262, and an antenna group 263, and the RRU 262 and the antenna group 263 may form a TRP 8. Coverage areas of an RRU 232 and the RRU 242 may be combined into a same logical cell (cell 2), and the RRU 252, and the RRU 262 may be combined into a same logical cell (cell 3).

It should be noted that in FIG. 3 and FIG. 4, an example in which a TRP includes an RRU and an antenna group is used for description. A person skilled in the art may understand that the TRP may include only an antenna group, or the TRP may include a BBU, an RRU, and an antenna group. This is not limited in embodiments of this application.

The following explains and describes terms in embodiments of this application.

### (1) Frequency offset

Due to impact of the Doppler effect, a frequency offset occurs at a receive end on a signal transmitted by a transmit end. An offset between a frequency on which the receive end receives the signal and a frequency on which the transmit end transmits the signal is referred to as a frequency offset. A base station and a terminal device are used as an example. A frequency offset occurs on a downlink signal sent by the base station after arriving at the terminal device. This frequency offset is referred to as a downlink frequency offset. To improve demodulation performance, the terminal device may further estimate the downlink frequency offset, and adjust its own crystal oscillator based on the downlink frequency offset, to keep frequency synchronization with the received signal on which the frequency offset occurs.

In addition, a frequency offset also occurs on an uplink signal sent by the terminal device after arriving at the base station. This frequency offset is referred to as an uplink frequency offset. To improve system performance, the base station may also estimate the uplink frequency offset, and perform pre-correction based on the uplink frequency offset. To be specific, the base station adjusts a frequency of a transmitted signal, so that an offset of a frequency of a received signal of the terminal device is as small as possible.

It should be noted that, uplink frequency offset=k^{∗}downlink frequency offset, where k is a positive number. For a communication system supporting a TDD mode, k=1. For a communication system supporting an FDD mode, k is a positive number less than or equal to 1. Specifically, k may be a ratio of an uplink center frequency to a downlink center frequency.

For example, a frequency on which the base station sends a downlink signal is f, and a frequency on which the terminal device receives the downlink signal is f+△f. If a downlink frequency offset between the terminal device and the base station is △f, it may be considered that an uplink frequency offset between the terminal device and the base station is also △f. For example, a frequency on which the terminal device sends an uplink signal is f, and a frequency on which the base station receives the uplink signal is f+△f.

Alternatively, a downlink frequency offset between the terminal device and the base station is △f, and an uplink frequency offset between the terminal device and the base station is k^{∗}△f. For example, a frequency on which the terminal device sends an uplink signal is f, and a frequency on which the base station receives the uplink signal is f+k^{∗}△f.

### (2) Tracking reference signal (tracking reference signal, TRS)

A TRS may be used by the terminal device to estimate a downlink frequency offset. To be specific, the base station and the terminal device pre-negotiate a transmit frequency f of the TRS. The base station sends the TRS based on the frequency f. The terminal device receives the TRS based on a frequency f+△f. In this case, a downlink frequency offset is △f.

### (3) Frequency locking

Frequency locking refers to a process in which the terminal device actively adjusts a crystal oscillator to match a frequency offset after determining a frequency offset. For example, the base station and the terminal device pre-negotiate a transmit frequency f of a TRS. The base station sends the TRS based on the frequency f. The terminal device receives the TRS based on a frequency f+△f. To better receive a downlink signal sent by the base station, the terminal device may lock the frequency f+△f, to subsequently receive downlink data and send uplink data on the frequency f+△f.

### (4)Correction

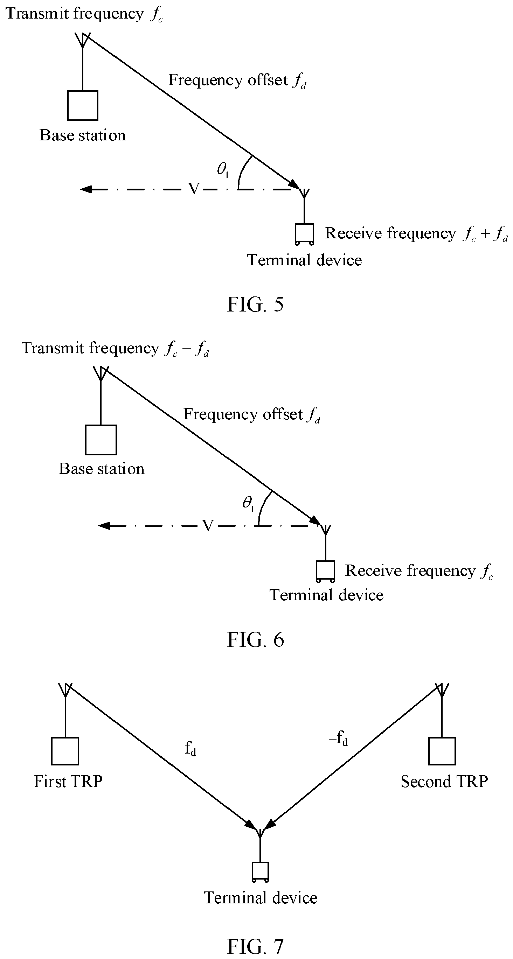

To resolve the problem of the frequency offset caused by the Doppler effect, the terminal may perform correction. For example, refer to FIG. 5. A transmit frequency of the base station is f_{c}, and the terminal device receives a downlink signal on a frequency (f_{c}+f_{d}). After determining that a downlink frequency offset is f_{d}, the terminal device corrects the frequency offset f_{d} by adjusting its own crystal oscillator or the like.

### (5) Pre-correction

To resolve the problem of the frequency offset caused by the Doppler effect, the network device may perform pre-correction. For example, refer to FIG. 6. The base station estimates an uplink frequency offset f_{d} based on a receive frequency of an uplink signal, and adjusts a transmit frequency of a downlink signal to (f_{c}-f_{d}) based on the uplink frequency offset. After a Doppler frequency offset is superimposed on a path of the downlink signal, a frequency offset at the terminal device is zero.

In the networking shown in FIG. 3 or FIG. 4, when the terminal device is located between two TRPs, there is a frequency offset between the terminal device and each of the two TRPs. Refer to FIG. 7. A downlink frequency offset is used as an example. There is a downlink frequency offset between a terminal device and a TRP 1 and a downlink frequency offset between a terminal device and a TRP 2, and one of the downlink frequency offsets is a positive value, and the other is a negative value. For example, the downlink frequency offset between the terminal device and the TRP 1 is f_{d1}, and the downlink frequency offset between the terminal device and the TRP 2 is -f_{d2}. Both f_{d1} and f_{d2} are positive values.

In the networking shown in FIG. 3 or FIG. 4, the terminal device located between two the TRPs may receive downlink reference signals (for example, TRSs) sent by the two TRPs (for example, the TRP 1 and the TRP 2 shown in FIG. 3). One of the downlink reference signals from the two TRPs is positive, and the other is negative. The downlink reference signals are superimposed and interfered with each other on an air interface. The terminal device obtains a frequency offset based on a superimposed reference signal. However, this frequency offset is not the downlink frequency offset between the terminal device and each of the TRP 1 and the TRP 2. It can be learned that the terminal device cannot obtain an accurate downlink frequency offset, and further cannot accurately perform frequency locking.

In addition, after obtaining an inaccurate downlink frequency offset, the terminal device sends an uplink signal after adjusting a local crystal oscillator based on the frequency offset. The TRP estimates an uplink frequency offset based on the received uplink signal. Because a frequency on which the terminal device sends the uplink signal includes the inaccurate frequency offset, an uplink frequency offset estimated by the TRP based on the received uplink signal is also inaccurate. Consequently, the TRP cannot perform accurate pre-correction.

For example, the TRP 1 and the TRP 2 send downlink signals on a frequency of 1000 Hz. If a frequency offset between the TRP 1 and the terminal device is 100 Hz, a frequency offset between the TRP 1 and the terminal device is -100 Hz. The downlink signals from the TRP 1 and the TRP 2 at the terminal device are superimposed with each other. The terminal device receives a superimposed downlink signal on a frequency of 1050 Hz. The terminal device locks the frequency of 1050 Hz and then sends an uplink signal on the frequency of 1050 Hz. The TRP 1 receives the uplink signal on a frequency of 1150 Hz. If uplink and downlink frequency offsets are the same, a frequency offset calculated by the TRP 1 is (1150 Hz-1000 Hz)/2=75 Hz, different from the actual frequency offset between the terminal device and the TRP 1. The TRP 1 performs pre-correction based on the frequency of 75 Hz. For example, the TRP 1 sends a downlink signal on a frequency of 925 Hz. Consequently, a receive frequency of the terminal device is 1025 Hz instead of 1000 Hz that is pre-negotiated between the network side and the terminal device. This may lead to a poor pre-correction effect.

Embodiments of this application provide a signal frequency adjustment method. During frequency correction, only a serving TRP (for example, on a frequency f) sends a TRS to a terminal device. The terminal device determines a downlink frequency offset (for example, △f) between the serving TRP and the terminal device based on a receive frequency (for example, f+△f) of the TRS. The terminal device sends an uplink signal based on the downlink frequency offset (for example, locking the frequency f+△f, where f is a communication frequency configured by the terminal device). The serving TRP and a cooperating TRP may separately determine a frequency on which the uplink signal is received. Then, the serving TRP and the cooperating TRP may determine, based on a difference between a frequency on which the serving TRP receives the uplink signal and a frequency on which the cooperating TRP receives the uplink signal, a frequency on which the serving TRP sends a downlink signal and a frequency on which the cooperating TRP sends a downlink signal, to ensure that the downlink signal of the serving TRP and the downlink signal of the cooperating TRP are simultaneously received by the terminal device.

In the foregoing method, a TRS is sent via only one TRP, to prevent TRSs from different TRPs from being superimposed with each other at the terminal device. In this way, an accurate frequency offset can be obtained. Compared with a prior-art solution in which two TRPs send TRSs to correct a frequency offset, the method provided in embodiments of this application reduces pilot overheads while ensuring normal communication of the terminal device.

In addition, in the foregoing method, user-level frequency locking is implemented based on a receive frequency of a single TRS at the terminal device, so as to avoid frequency locking chaos caused by receiving two TRSs at the terminal device. A downlink transmit frequency of the cooperating TRP is modified based on the difference between the receive frequency of the uplink signal from the terminal device at the serving TRP and the receive frequency of the uplink signal from the terminal device at the cooperating TRP, so that a receive frequency of the downlink signal from the serving TRP at the terminal device is the same as a receive frequency of the downlink signal from the cooperating TRP at the terminal device, to implement user-level pre-correction. This can ensure communication performance between the terminal device and each of the two TRPs.

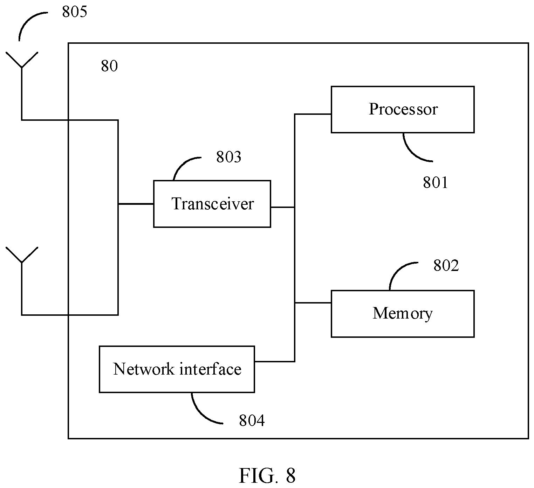

FIG. 8 is another schematic diagram of a structure of a network device. Refer to FIG. 8. The network device includes at least one processor 801, at least one memory 802, at least one transceiver 803, at least one network interface 804, and one or more antennas 805. The processor 801, the memory 802, the transceiver 803, and the network interface 804 are connected, for example, through a bus. The antenna 805 is connected to the transceiver 803. The network interface 804 is configured to enable the network device to be connected to another communication device through a communication link. For example, the network device is connected to a core network element through an S1 interface. In embodiments of this application, a connection may include various types of interfaces, transmission lines, buses, or the like. This is not limited in the embodiments.

A processor, for example, the processor 801, in embodiments of this application may include at least one of the following types: a general-purpose central processing unit (Central Processing Unit, CPU), a digital signal processor (Digital Signal Processor, DSP), a microprocessor, an application-specific integrated circuit (Application-Specific Integrated Circuit, ASIC), a microcontroller unit (Microcontroller Unit, MCU), a field programmable gate array (Field Programmable Gate Array, FPGA), or an integrated circuit for a logical operation. For example, the processor 801 may be a single-CPU (single-CPU) processor or a multi-CPU (multi-CPU) processor. The at least one processor 801 may be integrated into one chip or located on a plurality of different chips.

A memory, for example, the memory 802, in embodiments of this application may include at least one of the following types: a read-only memory (read-only memory, ROM), another type of static storage device that can store static information and instructions, a random access memory (random access memory, RAM), another type of dynamic storage device that can store information and instructions, or an electrically erasable programmable read-only memory (Electrically erasable programmable read-only memory, EEPROM). In some scenarios, the memory may alternatively be a compact disc read-only memory (compact disc read-only memory, CD-ROM) or another compact disc storage medium, an optical disc storage medium (including a compact disc, a laser disc, an optical disc, a digital versatile disc, a Blu-ray disc, and the like), a magnetic disk storage medium or another magnetic storage device, or any other medium that can be configured to carry or store expected program code in a form of instructions or a data structure and that can be accessed by a computer. However, the memory is not limited thereto.

The memory 802 may exist independently, and is connected to the processor 801. Optionally, the memory 802 may alternatively be integrated with the processor 801, for example, integrated into a chip. The memory 802 can store program code for performing technical solutions in embodiments of this application, and the processor 801 controls execution of the program code. Various types of executed computer program code may also be considered as drivers of the processor 801. For example, the processor 801 is configured to execute the computer program code stored in the memory 802, to implement the technical solutions in embodiments of this application.

The transceiver 803 may be configured to support receiving or sending of a radio frequency signal between the network device and a terminal device, and the transceiver 803 may be connected to the antenna 805. Specifically, the one or more antennas 805 may receive a radio frequency signal. The transceiver 803 may be configured to: receive the radio frequency signal from the antenna, convert the radio frequency signal into a digital baseband signal or a digital intermediate frequency signal, and provide the digital baseband signal or the digital intermediate frequency signal for the processor 801, so that the processor 801 further processes the digital baseband signal or the digital intermediate frequency signal, for example, performs demodulation processing and decoding processing. In addition, the transceiver 803 may be configured to: receive a modulated digital baseband signal or a modulated digital intermediate frequency signal from the processor 801; convert the modulated digital baseband signal or digital intermediate frequency signal into a radio frequency signal; and send the radio frequency signal through the one or more antennas 805. Specifically, the transceiver 803 may selectively perform one or more levels of frequency down-mixing processing and analog-to-digital conversion processing on the radio frequency signal to obtain the digital baseband signal or the digital intermediate frequency signal. A sequence of the frequency down-mixing processing and the analog-to-digital conversion processing is adjustable. The transceiver 803 may selectively perform one or more levels of frequency up-mixing processing and digital-to-analog conversion processing on the modulated digital baseband signal or the modulated digital intermediate frequency signal to obtain the radio frequency signal. A sequence of the frequency up-mixing processing and the digital-to-analog conversion processing is adjustable. The digital baseband signal and the digital intermediate frequency signal may be collectively referred to as digital signals. The transceiver may be referred to as a transceiver circuit, a transceiver unit, a transceiver component, a sending circuit, a sending unit, a sending component, or the like.

It should be noted that a communication apparatus 80 may be an entire network device, or may be a part or a component that implements a function of the network device, or may be a communication chip. When the communication apparatus 80 is the communication chip, the transceiver 803 may be an interface circuit of the chip, and the interface circuit is configured to read and output a baseband signal.

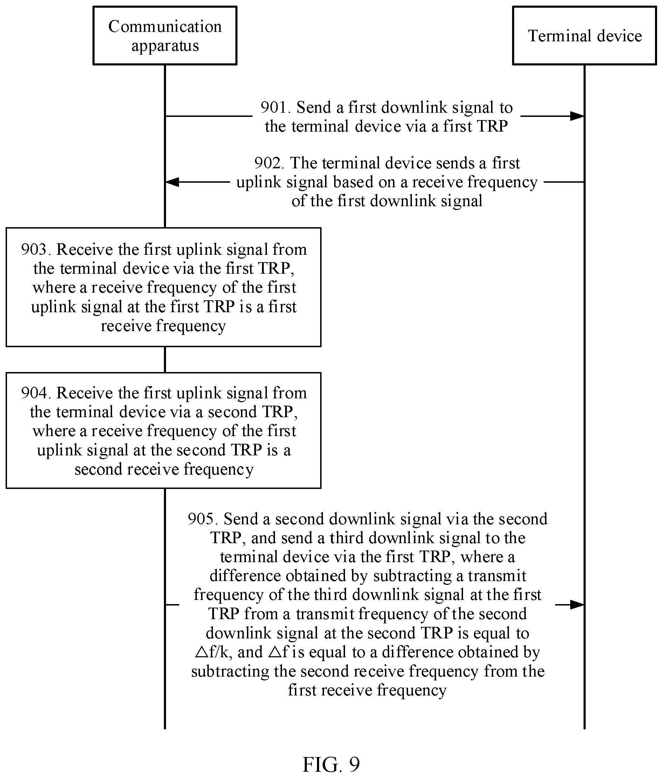

An embodiment of this application provides a signal frequency adjustment method, which is applicable to the networking shown in FIG. 3. It should be noted that a first TRP and a second TRP in FIG. 9 may provide a communication service for terminal devices in different areas or directions. A communication apparatus may include or not include the first TRP or the second TRP. The following provides descriptions with reference to two implementations.

In a first implementation, the communication apparatus includes the first TRP and the second TRP. In this case, the communication apparatus may include a baseband unit, a radio frequency unit, and an antenna group. The first TRP and the second TRP may be radio frequency units and/or antennas in the communication apparatus, or may be logical entities in the communication apparatus.

For example, the first TRP in FIG. 9 may be the TRP 1 in FIG. 3, and the second TRP in FIG. 9 may be the TRP 2 in FIG. 3. To be specific, the first TRP and the second TRP share a same BBU, and are different transmission reception points of a same base station. The communication apparatus in FIG. 9 may be the network device 20 in the networking shown in FIG. 3. For example, the communication apparatus includes the BBU 201, the TRP 1, and the TRP 2.

In a second implementation, the communication apparatus does not include the first TRP or the second TRP. In this case, the communication apparatus may be a baseband unit, the first TRP and the second TRP may be radio frequency units and/or antennas, and both the first TRP and the second TRP are connected to the baseband unit.

For example, the first TRP in FIG. 9 may be the TRP 1 in FIG. 3, and the second TRP in FIG. 9 may be the TRP 2 in FIG. 3. To be specific, the first TRP and the second TRP share a same BBU, and are different transmission reception points of a same base station. The communication apparatus may be the BBU 201 in the network device 20. In other words, the communication apparatus does not include the TRP 1 and the TRP 2.

As shown in FIG. 9, the method includes the following steps.

901. The communication apparatus sends a first downlink signal to the terminal device via the first TRP

In the networking scenario shown in FIG. 3, when the terminal device is located between two adjacent poles, there is a frequency offset between the terminal device and each of TRPs deployed on the two poles. For example, the first TRP and the second TRP in this embodiment of this application are deployed on adjacent poles. The first TRP and the second TRP are connected to a same baseband unit (for example, a BBU). When the terminal device is located between the first TRP and the second TRP, there is a frequency offset between the terminal device and each of the first TRP and the second TRP. The first TRP is a TRP closer to the terminal device. The first TRP may also be referred to as a serving TRP, and the second TRP may also be referred to as a cooperating TRP. It should be noted that a distance between the TRP and the terminal device may be a distance between an antenna group included in the TRP and the terminal device.

Optionally, the first downlink signal may be a TRS signal.

In the foregoing second implementation, that a communication apparatus sends a first downlink signal to a terminal device via the first TRP includes: The baseband unit generates a baseband signal, and sends the baseband signal to the first TRP. The first TRP converts the baseband signal into a radio frequency signal having a frequency f, and sends the radio frequency signal to the terminal device. The frequency f is a transmit frequency negotiated between the network device 20 and the terminal device.

In the first implementation, that a communication apparatus sends a first downlink signal to a terminal device via the first TRP includes: The baseband unit of the communication apparatus generates a baseband signal, and sends the baseband signal to the first TRP included in the communication apparatus. The first TRP converts the baseband signal into a radio frequency signal having a frequency f, and sends the radio frequency signal to the terminal device.

902. The terminal device sends a first uplink signal based on a receive frequency of the first downlink signal.

In a specific implementation, a frequency offset occurs on the first downlink signal in a transmission process, and there is an offset between a frequency of a signal received by the terminal device and a frequency on which the first TRP sends the first downlink signal. The terminal device may receive the first downlink signal based on a frequency on which the offset occurs, lock the frequency on which the offset occurs, and send the first uplink signal based on the locked frequency. To be specific, a transmit frequency of the first uplink signal at the terminal device is the receive frequency of the first downlink signal at the terminal device.

Alternatively, optionally, the terminal device may receive the first downlink signal on a frequency on which the offset occurs, obtain a new frequency based on the receive frequency, lock the new frequency, and send the first uplink signal on the new frequency. For example, an offset may be added to the receive frequency for the terminal device, to obtain a new frequency.

903. The communication apparatus receives the first uplink signal from the terminal device via the first TRP, where a receive frequency of the first uplink signal at the first TRP is a first receive frequency.

Specifically, a Doppler effect also occurs in a transmission process of the first uplink signal, and there is an offset between the receive frequency of the first uplink signal at the first TRP and the transmit frequency of the first uplink signal. In other words, there is an uplink frequency offset between the first TRP and the terminal device.

It should be noted that the uplink frequency offset between the first TRP and the terminal device may be the same as a downlink frequency offset between the first TRP and the terminal device. Optionally, the uplink frequency offset between the first TRP and the terminal device may be different from the downlink frequency offset between the first TRP and the terminal device. Specifically, uplink frequency offset=k^{∗}downlink frequency offset, where k is a positive number less than or equal to 1.

For example, a transmit frequency of the first downlink signal is f, and an offset occurs on a frequency of the first downlink signal in the transmission process, so that the receive frequency of the first downlink signal at the terminal device is f+△f₁. Alternatively, the terminal device may lock the frequency f+△f₁, and send the first uplink signal based on the frequency f+△f₁. In the transmission process, an offset occurs on a frequency of the first uplink signal, and the receive frequency of the first uplink signal at the first TRP is f+2△f₁. △f₁ is a frequency offset (the uplink frequency offset or the downlink frequency offset) between the terminal device and the first TRP, and △f₁ is a positive value.

904. The communication apparatus receives the first uplink signal from the terminal device via the second TRP, where a receive frequency of the first uplink signal at the second TRP is a second receive frequency.

In a specific implementation, a Doppler effect also occurs in a process of transmitting the first uplink signal to the second TRP, and there is also an offset between the receive frequency of the first uplink signal at the second TRP and the transmit frequency of the first uplink signal. In other words, there is also an uplink frequency offset between the second TRP and the terminal device.

It should be noted that one of the uplink frequency offset between the terminal device and the first TRP and the uplink frequency offset between the terminal device and the second TRP is a positive value, and the other is a negative value. Absolute values of the two uplink frequency offsets may be the same or may be different.

For example, the transmit frequency of the first downlink signal is f, and the receive frequency of the first downlink signal at the terminal device is f+△f₁. Alternatively, the terminal device may lock the frequency f+△f₁, and send the first uplink signal based on f+△f₁. The receive frequency of the first uplink signal at the second TRP is f+△f₁-△f₂. -△f₂ is the uplink frequency offset or the downlink frequency offset between the terminal device and the second TRP, and -△f₂ is a negative value.

905. The communication apparatus sends a second downlink signal via the second TRP, and sends a third downlink signal to the terminal device via the first TRP.

A difference obtained by subtracting a transmit frequency of the third downlink signal at the first TRP from a transmit frequency of the second downlink signal at the second TRP is equal to △f/k. △f is equal to a difference obtained by subtracting the second receive frequency from the first receive frequency. k is a ratio of an uplink center frequency to a downlink center frequency. Specifically, pre-correction may be performed by either or both of the first TRP and the second TRP.

It should be noted that the uplink frequency offset between the terminal device and the first TRP and a downlink frequency offset between the terminal device and the first TRP may be the same, and that the uplink frequency offset between the terminal device and the second TRP and a downlink frequency offset between the terminal device and the second TRP may also be the same. Therefore, it may be considered that the difference between the first receive frequency and the second receive frequency is equal to the difference obtained by subtracting the transmit frequency of the third downlink signal at the first TRP from the transmit frequency of the second downlink signal at the second TRP. Based on this, the transmit frequency of the third downlink signal at the first TRP and the transmit frequency of the second downlink signal at the second TRP may be adjusted based on the difference between the first receive frequency and the second receive frequency, so that the receive frequency of the third downlink signal at the terminal device and the receive frequency of the second downlink signal at the terminal device are the same. This ensures that the terminal device can normally communicate with the first TRP or the second TRP. The frequency offset is corrected by sending a downlink signal via a single TRP, so that downlink signals from different TRPs at the terminal device are prevented from being superimposed and interfered with each other while pilot overheads are reduced. This ensures accurate frequency locking on a terminal side and implements accurate pre-correction on a network side.

For example, uplink frequency offset=k^{∗}downlink frequency offset, a frequency on which the first TRP sends the first downlink signal is f, a frequency on which the terminal device receives the first downlink signal is f+△f₁, and a frequency on which the terminal device sends the first uplink signal is f+△f₁. A frequency on which the first TRP receives the first uplink signal is f+△f₁+k^{∗}△f₁. A frequency on which the second TRP receives the first uplink signal is f+△f₁-k^{∗}△f₂. A difference between the first receive frequency and the second receive frequency is equal to k^{∗}(△f₁+△f₂). A difference between the first receive frequency and the second receive frequency may be considered as a difference between an uplink frequency offset of the first TRP and an uplink frequency offset of the second TRP.

△f₁ is a downlink frequency offset between the first TRP and the terminal device. -△f₂ is a downlink frequency offset between the second TRP and the terminal device. A difference between the downlink frequency offset of the first TRP and the downlink frequency offset of the second TRP is △f₁+△f₂.

It can be learned that, when k=1, the difference between the uplink frequency offset of the first TRP and the uplink frequency offset of the second TRP is equal to the difference between the downlink frequency offset of the first TRP and the downlink frequency offset of the second TRP. The difference between the first receive frequency and the second receive frequency may represent the difference between the uplink frequency offset of the first TRP and the uplink frequency offset of the second TRP, and represent the difference between the downlink frequency offset of the first TRP and the downlink frequency offset of the second TRP. To implement pre-correction on the network side, the difference between the transmit frequency of the second downlink signal and the transmit frequency of the third downlink signal is the same as the difference between the first receive frequency and the second receive frequency.

When k≠1, the difference between the uplink frequency offset of the first TRP and the uplink frequency offset of the second TRP is unequal to the difference between the downlink frequency offset of the first TRP and the downlink frequency offset of the second TRP. The difference between the first receive frequency and the second receive frequency may represent the difference between the uplink frequency offset of the first TRP and the uplink frequency offset of the second TRP. The difference between the downlink frequency offset of the first TRP and the downlink frequency offset of the second TRP is △f/k. △f is the difference between the first receive frequency and the second receive frequency, and △f is a positive value. To implement pre-correction on the network side, the difference between the transmit frequency of the second downlink signal and the transmit frequency of the third downlink signal is △f/k.

In a specific implementation, the communication apparatus may not adjust the transmit frequency of the first TRP when performing pre-correction based on the difference between the first receive frequency and the second receive frequency. Therefore, the transmit frequency of the third downlink signal at the first TRP is equal to the transmit frequency of the first downlink signal at the first TRP, which are both f+△f.

Then, the communication apparatus may determine the transmit frequency of the second downlink signal at the second TRP based on the difference obtained by subtracting the second receive frequency from the first receive frequency. For example, both the transmit frequency of the first downlink signal at the first TRP and the transmit frequency of the third downlink signal at the first TRP are f. The difference obtained by subtracting the second receive frequency from the first receive frequency is △f. The transmit frequency of the second downlink signal at the second TRP is f+△f/k. k is a pre-configured parameter, and may be a positive number less than or equal to 1.

In a specific implementation, the communication apparatus may perform pre-correction in the following two manners.

Manner 1: The transmit frequency of the first TRP is not adjusted. The baseband unit of the communication apparatus sends the difference obtained by subtracting the second receive frequency from the first receive frequency to the second TRP, so that the second TRP adjusts the transmit frequency based on the difference.

For example, when △f is sent to the second TRP, the second TRP adjusts the transmit frequency based on the frequency f, so that an adjusted downlink transmit frequency at the second TRP is f+△f/k. For example, the transmit frequency of the second downlink signal in this embodiment of this application is f+△f/k.

Specifically, the second TRP may include an RRU and an antenna group. △f is sent to the RRU, so that the RRU sends the second downlink signal on the frequency of f+△f/k via the antenna group. This implements that the second downlink signal is sent via the second TRP.

Manner 2: The transmit frequency of the first TRP is not adjusted. The baseband unit of the communication apparatus adjusts a transmit frequency of a baseband signal based on the difference obtained by subtracting the second receive frequency from the first receive frequency. A difference between a transmit frequency on which the baseband signal is sent to the first TRP and a transmit frequency on which the baseband signal is sent to the second TRP is related to the difference obtained by subtracting the second receive frequency from the first receive frequency. After receiving the baseband signal sent by the baseband unit, the first TRP and the second TRP may only need to convert the baseband signal into a radio frequency signal, and may not perform frequency adjustment, so as to ensure that a difference obtained by subtracting a downlink transmit frequency of the first TRP from a downlink transmit frequency of the second TRP is equal to the difference obtained by subtracting the second receive frequency from the first receive frequency.

For example, the baseband unit sends a third baseband signal to the first TRP, where the third baseband signal is used by the first TRP to send the third downlink signal to the terminal device. For example, the first TRP may convert the third baseband signal into a radio frequency signal, that is, the third downlink signal, so as to send the third downlink signal to the terminal device.

The baseband unit sends a second baseband signal to the second TRP, where the second baseband signal is used by the second TRP to send the second downlink signal to the terminal device. For example, the second TRP may convert the second baseband signal into a radio frequency signal, that is, the second downlink signal, so as to send the second downlink signal to the terminal device.

A difference obtained by subtracting a transmit frequency of the third baseband signal from a transmit frequency of the second baseband signal is equal to △f/k, where △f is the difference obtained by subtracting the first receive frequency from the second receive frequency.

Optionally, the communication apparatus may adjust the transmit frequency at the first TRP and the transmit frequency at the second TRP when performing pre-correction based on the difference obtained between the first receive frequency and the second receive frequency. Therefore, the transmit frequency of the third downlink signal at the first TRP is unequal to the transmit frequency of the first downlink signal at the first TRP

Specifically, the communication apparatus (or the baseband processing unit of the communication apparatus) may determine the transmit frequency of the second downlink signal at the second TRP and the transmit frequency of the third downlink signal at the first TRP based on the difference obtained by subtracting the second receive frequency from the first receive frequency.

For example, the transmit frequency of the first downlink signal at the first TRP is f. The difference between the second receive frequency and the first receive frequency is f₂. The transmit frequency of the third downlink signal is f+f₁. The transmit frequency of the second downlink signal is f+△f₁+△f₂, where △f₁ is a frequency adjustment factor.

Optionally, the communication apparatus may further send △f₁ to the first TRP, so that a frequency on which the first TRP sends the third downlink signal is f+△f₁. The communication apparatus may further send △f₁+△f₂ to the second TRP, so that a frequency on which the second TRP sends the second downlink signal is f+△f₁+△f₂.

Specifically, when the communication apparatus is a baseband unit, the baseband unit sends △f₁ to the first TRP, and sends △f₁+△f₂ to the second TRP. When the communication apparatus is a network device, a baseband unit of the network device sends △f₁ to the first TRP, and sends △f₁+△f₂ to the second TRP.

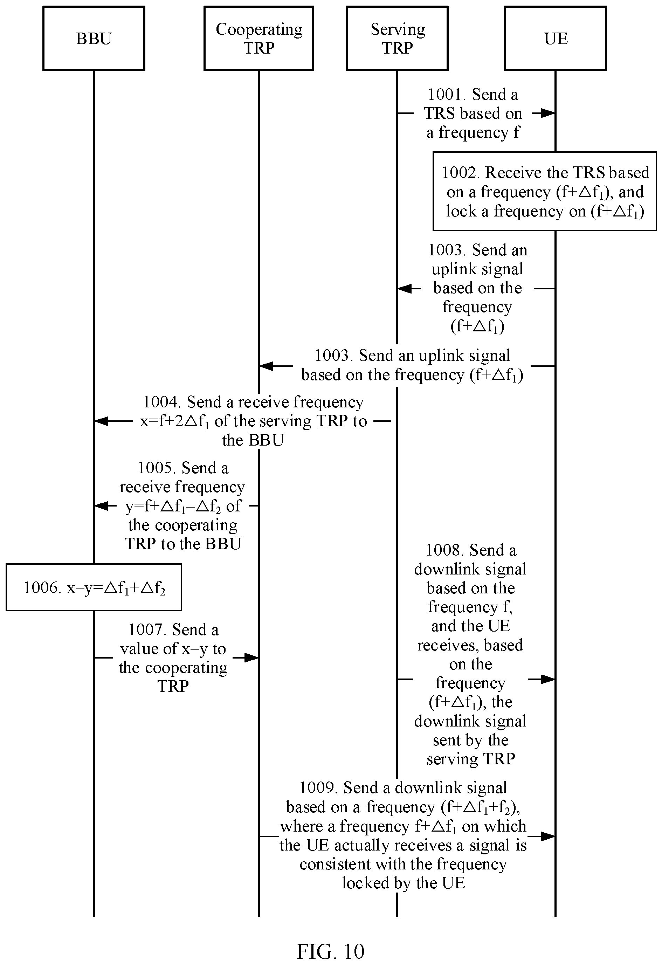

The following describes the method provided in this embodiment of this application in detail with reference to a specific example. Specifically, UE is located between two adjacent poles on which two TRPs are deployed, and the two TRPs are connected to a same BBU. A TRP closer to the UE is referred to as a serving TRP, and the other TRP is referred to as a cooperating TRP. A transmit frequency of the cooperating TRP is adjusted based on the serving TRP, to implement frequency pre-correction on a network side. As shown in FIG. 10, the method includes the following steps.

1001. The serving TRP sends a TRS based on a frequency f.

1002. The UE receives the TRS based on a frequency (f+△f₁), and locks a frequency on (f+△f₁).

△f₁ is a downlink frequency offset between the UE and the serving TRP

1003. The UE sends an uplink signal based on the frequency (f+△f₁).

1004. The serving TRP receives the uplink signal sent by the UE, and sends a receive frequency x=f+2△f₁ of the serving TRP to a BBU.

It should be noted that, assuming that an uplink frequency offset between the UE and the serving TRP is equal to the downlink frequency offset between the UE and the serving TRP, there is a difference △f₁ between the receive frequency of the serving TRP and the transmit frequency (f+△f₁) of the UE. In other words, the receive frequency of the serving TRP is x=f+2△f₁. The receive frequency x of the serving TRP is the first receive frequency in this embodiment of this application.

1005. A cooperating TRP receives the uplink signal sent by the UE, and sends a receive frequency y=f+△f₁-△f₂ of the cooperating TRP to the BBU.

It should be noted that one of an uplink frequency offset between the UE and the cooperating TRP and the uplink frequency offset between the UE and the serving TRP is a positive value, and the other is a negative value. The uplink frequency offset between the UE and the serving TRP is △f₁. Therefore, the uplink frequency offset between the UE and the cooperating TRP may be -△f₂. Therefore, there is a difference -△f₂ between the receive frequency of the cooperating TRP△f and the transmit frequency (f+△f₁) of the UE. In other words, the receive frequency of the cooperating TRP is y=f+△f₁-△f₂. The receive frequency y of the cooperating TRP is the second receive frequency in this embodiment of this application.

1006. The BBU calculates a difference between the receive frequency of the serving TRP and the receive frequency of the cooperating TRP, that is, x-y=△f₁+△f₂.

x-y is the difference obtained by subtracting the second receive frequency from the first receive frequency in this embodiment of this application.

1007. The BBU sends the value of x-y to the cooperating TRP

1008. The serving TRP sends a downlink signal based on the frequency f, and the UE receives, based on the frequency (f+△f₁), the downlink signal sent by the serving TRP.

It should be noted that the receive frequency of the UE is consistent with the frequency locked by the UE, to ensure normal communication between the UE and the serving TRP

1009. The cooperating TRP sends a downlink signal based on a frequency (f+f₁+f₂), where a frequency f+△f₁ on which the UE actually receives a signal is consistent with the frequency locked by the UE.

It should be noted that the receive frequency of the UE is consistent with the frequency locked by the UE, to ensure normal communication between the UE and the cooperating TRP

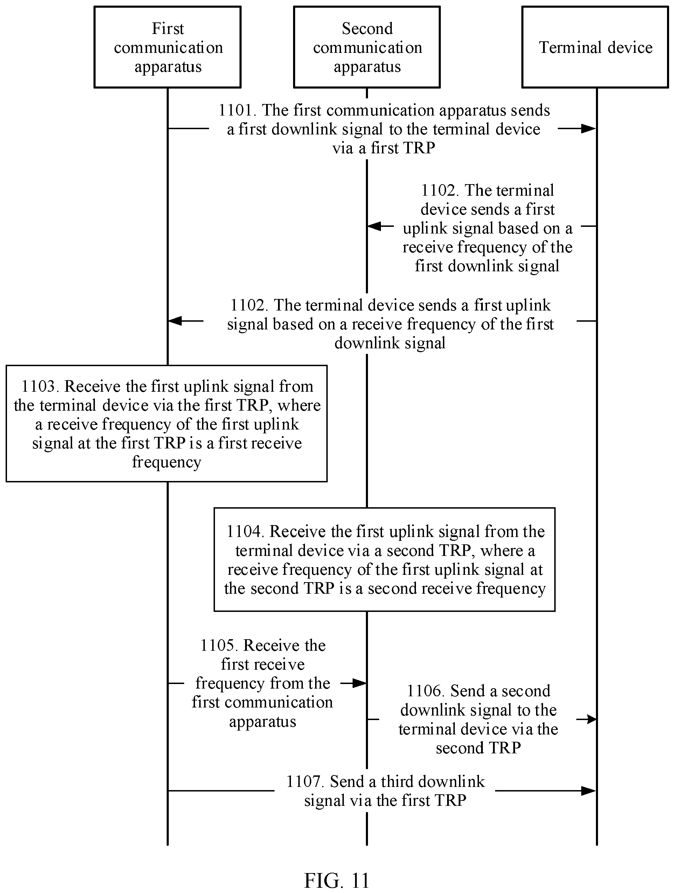

An embodiment of this application further provides a signal frequency adjustment method, which is applicable to the networking shown in FIG. 4. It should be noted that a first TRP and a second TRP in FIG. 11 may provide a communication service for terminal devices in different areas or directions. A communication apparatus may include or not include a first TRP or a second TRP. The following provides descriptions with reference to two implementations.

In a first implementation, the communication apparatus includes the first TRP and the second TRP. In this case, the communication apparatus may include a baseband unit, a radio frequency unit, and an antenna group. The first TRP and the second TRP may be radio frequency units and/or antennas in the communication apparatus, or may be logical entities in the communication apparatus.

For example, the first TRP in FIG. 11 may be the TRP 5 in FIG. 4, and the second TRP in FIG. 11 may be the TRP 6 in FIG. 4. To be specific, the first TRP and the second TRP are connected to different BBUs, and are transmission reception points of different base stations. A first communication apparatus in FIG. 11 may be the network device 22 in the networking shown in FIG. 4, for example, including the BBU 221 and the TRP 5. A second communication apparatus in FIG. 11 may be the network device 23 in the networking shown in FIG. 4, including the BBU 231 and the TRP 6. In other words, the communication apparatus includes a TRP

In a second implementation, the communication apparatus does not include the first TRP or the second TRP. In this case, the communication apparatus may be a baseband unit, the first TRP and the second TRP may be radio frequency units and/or antennas, and both the first TRP and the second TRP are connected to the baseband unit.

For example, the first TRP in FIG. 11 may be the TRP 5 in FIG. 4, and the second TRP in FIG. 11 may be the TRP 6 in FIG. 4. To be specific, the first TRP and the second TRP share a same BBU, and are different transmission reception points of a same base station. A first communication apparatus in FIG. 11 may be the BBU 221 in the networking shown in FIG. 4, and a second communication apparatus in FIG. 11 may be the BBU 231 in the networking shown in FIG. 4. In other words, the communication apparatus does not include a TRP

It should be noted that the first TRP in FIG. 11 may be the TRP 5 in FIG. 4, and the second TRP in FIG. 11 may be the TRP 6 in FIG. 4. To be specific, the first TRP and the second TRP are connected to different BBUs, and are transmission reception points of different base stations. As shown in FIG. 9, the method includes the following steps.

1101. The first communication apparatus sends a first downlink signal to a terminal device via the first TRP.

It should be noted that the first downlink signal may be a TRS signal. In the networking scenario shown in FIG. 3, when the terminal device is located between two adjacent poles, there is a frequency offset between the terminal device and each of TRPs deployed on the two poles. For example, the first TRP and the second TRP in this embodiment of this application are deployed on adjacent poles. The first TRP and the second TRP are connected to different baseband units. When the terminal device is located between the first TRP and the second TRP, there is a frequency offset between the terminal device and each of the first TRP and the second TRP. The first TRP is a TRP closer to the terminal device. The first TRP may also be referred to as a serving TRP, and the second TRP may also be referred to as a cooperating TRP. It should be noted that a distance between the TRP and the terminal device may be a distance between an antenna group included in the TRP and the terminal device.

1102. The terminal device sends a first uplink signal based on a receive frequency of the first downlink signal.

In a specific implementation, a frequency offset occurs on the first downlink signal in a transmission process, and there is an offset between a frequency of a signal received by the terminal device and a frequency on which the first TRP sends the first downlink signal. The terminal device may receive the first downlink signal based on a frequency on which the offset occurs, lock the frequency on which the offset occurs, and send the first uplink signal based on the locked frequency. To be specific, a transmit frequency of the first uplink signal at the terminal device is the receive frequency of the first downlink signal at the terminal device.

1103. The first communication apparatus receives the first uplink signal from the terminal device via the first TRP, where a receive frequency of the first uplink signal at the first TRP is a first receive frequency.

In a specific implementation, a Doppler effect also occurs in a transmission process of the first uplink signal, and there is an offset between the receive frequency of the first uplink signal at the first TRP and the transmit frequency of the first uplink signal. In other words, there is an uplink frequency offset between the first TRP and the terminal device.

It should be noted that the uplink frequency offset between the first TRP and the terminal device may be the same as a downlink frequency offset between the first TRP and the terminal device. Optionally, the uplink frequency offset between the first TRP and the terminal device may be different from the downlink frequency offset between the first TRP and the terminal device. Specifically, uplink frequency offset=k^{∗}downlink frequency offset, where k is a positive number less than or equal to 1.

For example, a transmit frequency of the first downlink signal is f, and an offset occurs on a frequency of the first downlink signal in the transmission process, so that the receive frequency of the first downlink signal at the terminal device is f+△f₁. Alternatively, the terminal device may lock the frequency f+△f₁, and send the first uplink signal based on f+△f₁. In the transmission process, an offset occurs on a frequency of the first uplink signal, and the receive frequency of the first uplink signal at the first TRP is f+2△f₁. △f₁ is a frequency offset (the uplink frequency offset or the downlink frequency offset) between the terminal device and the first TRP, and △f₁ is a positive value.

1104. The second communication apparatus receives the first uplink signal from the terminal device via the second TRP, where a receive frequency of the first uplink signal at the second TRP is a second receive frequency.

In a specific implementation, a Doppler effect also occurs in a process of transmitting the first uplink signal to the second TRP, and there is also an offset between the receive frequency of the first uplink signal at the second TRP and the transmit frequency of the first uplink signal. In other words, there is also an uplink frequency offset between the second TRP and the terminal device.

It should be noted that one of the uplink frequency offset between the terminal device and the first TRP and the uplink frequency offset between the terminal device and the second TRP is a positive value, and the other is a negative value. Absolute values of the two uplink frequency offsets may be the same or may be different.

For example, the transmit frequency of the first downlink signal is f, and the receive frequency of the first downlink signal at the terminal device is f+△f₁. Alternatively, the terminal device may lock the frequency f+△f₁, and send the first uplink signal based on f+△f₁. The receive frequency of the first uplink signal at the second TRP is f+△f₁-△f₂. -△f₂ is an uplink frequency offset or a downlink frequency offset between the terminal device and the second TRP, and -△f₂ is a negative value.

1105. The second communication apparatus receives the first receive frequency from the first communication apparatus.

In a specific implementation, after receiving the first receive frequency from the first communication apparatus, the second communication apparatus may calculate a value obtained by subtracting the second receive frequency from the first receive frequency, to perform pre-correction based on the value, and adjust a frequency on which the second TRP sends a downlink signal.

Step 1105 is merely an implementation. Pre-correction is not performed at the first TRP, and the first TRP still sends a third downlink signal on the transmit frequency in step 1101. Pre-correction is performed at the second TRP based on a difference between the second receive frequency and a third receive frequency. In another implementation, the first communication apparatus first sends the first receive frequency to the second communication apparatus. Then, the second communication apparatus may send the second receive frequency (or the difference between the second receive frequency and the first receive frequency) to the first communication apparatus, so that both the first TRP and the second TRP perform pre-correction based on the difference between the second receive frequency and the third receive frequency. Alternatively, in another implementation, the second communication apparatus first sends the second receive frequency to the first communication apparatus. Then, the first communication apparatus performs pre-correction based on the difference between the second receive frequency and the first receive frequency. Alternatively, in another implementation, the second communication apparatus first sends the second receive frequency to the first communication apparatus. Then, the first communication apparatus may send the first receive frequency (or the difference between the second receive frequency and the first receive frequency) to the second communication apparatus, so that both the first TRP and the second TRP perform pre-correction based on the difference between the second receive frequency and the third receive frequency.

1106. The second communication apparatus sends a second downlink signal via the second TRP

1107. The first communication apparatus sends the third downlink signal to the terminal device via the first TRP.

A difference obtained by subtracting a transmit frequency of the third downlink signal at the first TRP from a transmit frequency of the second downlink signal at the second TRP is equal to △f/k. △f is equal to the difference obtained by subtracting the second receive frequency from the first receive frequency. k is a ratio of an uplink center frequency to a downlink center frequency.

The difference obtained by subtracting the transmit frequency of the third downlink signal at the first TRP from the transmit frequency of the second downlink signal at the second TRP is equal to △f/k. Pre-correction may be performed by either or both of the first TRP and the second TRP. For details, refer to related content in step 1105.

It should be noted that the uplink frequency offset between the terminal device and the first TRP and a downlink frequency offset between the terminal device and the first TRP may be the same, and that the uplink frequency offset between the terminal device and the second TRP and a downlink frequency offset between the terminal device and the second TRP may also be the same. Therefore, it may be considered that the difference between the first receive frequency and the second receive frequency is equal to the difference obtained by subtracting the transmit frequency of the third downlink signal at the first TRP from the transmit frequency of the second downlink signal at the second TRP. Based on this, the transmit frequency of the third downlink signal at the first TRP and the transmit frequency of the second downlink signal at the second TRP may be adjusted based on the difference between the first receive frequency and the second receive frequency, so that the receive frequency of the third downlink signal at the terminal device and the receive frequency of the second downlink signal at the terminal device are the same. This ensures that the terminal device can normally communicate with the first TRP or the second TRP. The frequency offset is corrected by sending a downlink signal via a single TRP, so that downlink signals from different TRPs at the terminal device are prevented from being superimposed and interfered with each other while pilot overheads are reduced. This ensures accurate frequency locking on a terminal side and implements accurate pre-correction on a network side.

For example, uplink frequency offset=k^{∗}downlink frequency offset, a frequency on which the first TRP sends the first downlink signal is f, a frequency on which the terminal device receives the first downlink signal is f+△f₁, and a frequency on which the terminal device sends the first uplink signal is f+△f₁. A frequency on which the first TRP receives the first uplink signal is f+△f₁+k^{∗}△f₁. A frequency on which the second TRP receives the first uplink signal is f+△f₁-k^{∗}△f₂. A difference between the first receive frequency and the second receive frequency is equal to k^{∗}(△f₁+△f₂). A difference between the first receive frequency and the second receive frequency may be considered as a difference between an uplink frequency offset of the first TRP and an uplink frequency offset of the second TRP.

△f₁ is a downlink frequency offset between the first TRP and the terminal device. -△f₂ is a downlink frequency offset between the second TRP and the terminal device. A difference between the downlink frequency offset of the first TRP and the downlink frequency offset of the second TRP is △f₁+△f₂.

It can be learned that, when k=1, the difference between the uplink frequency offset of the first TRP and the uplink frequency offset of the second TRP is equal to the difference between the downlink frequency offset of the first TRP and the downlink frequency offset of the second TRP. The difference between the first receive frequency and the second receive frequency may represent the difference between the uplink frequency offset of the first TRP and the uplink frequency offset of the second TRP, and represent the difference between the downlink frequency offset of the first TRP and the downlink frequency offset of the second TRP. To implement pre-correction on the network side, the difference between the transmit frequency of the second downlink signal and the transmit frequency of the third downlink signal is the same as the difference between the first receive frequency and the second receive frequency.

When k≠1, the difference between the uplink frequency offset of the first TRP and the uplink frequency offset of the second TRP is unequal to the difference between the downlink frequency offset of the first TRP and the downlink frequency offset of the second TRP. The difference between the first receive frequency and the second receive frequency may represent the difference between the uplink frequency offset of the first TRP and the uplink frequency offset of the second TRP. The difference between the downlink frequency offset of the first TRP and the downlink frequency offset of the second TRP is △f/k. △f is the difference between the first receive frequency and the second receive frequency, and △f is a positive value. To implement pre-correction on the network side, the difference between the transmit frequency of the second downlink signal and the transmit frequency of the third downlink signal is △f/k.

In a specific implementation, the transmit frequency of the first TRP may not be adjusted when pre-correction is performed based on the difference between the first receive frequency and the second receive frequency. Therefore, the transmit frequency of the third downlink signal at the first TRP is equal to the transmit frequency of the first downlink signal at the first TRP, which are both f+△f.

Then, the transmit frequency of the second downlink signal at the second TRP may be determined based on the difference obtained by subtracting the second receive frequency from the first receive frequency. For example, both the transmit frequency of the first downlink signal at the first TRP and the transmit frequency of the third downlink signal at the first TRP are f. The difference obtained by subtracting the second receive frequency from the first receive frequency is △f. The transmit frequency of the second downlink signal at the second TRP is f+△f/k. k is a pre-configured parameter, and may be a positive number less than or equal to 1.

In a specific implementation, pre-correction may be performed in the following two manners:
Manner 1: The transmit frequency of the first TRP is not adjusted. A second baseband unit of the second communication apparatus sends the difference obtained by subtracting the second receive frequency from the first receive frequency to the second TRP, so that the second TRP adjusts the transmit frequency based on the difference.

For example, when △f is sent to the second TRP, the second TRP adjusts the transmit frequency based on the frequency f, so that an adjusted downlink transmit frequency at the second TRP is f+△f/k. For example, the transmit frequency of the second downlink signal in this embodiment of this application is f+△f/k.

Specifically, the second TRP may include an RRU and an antenna group. △f is sent to the RRU, so that the RRU sends the second downlink signal on the frequency of f+△f/k via the antenna group. This implements that the second downlink signal is sent via the second TRP.

Manner 2: The transmit frequency of the first TRP is not adjusted. A second baseband unit of the second communication apparatus adjusts a transmit frequency of a baseband signal based on the difference obtained by subtracting the second receive frequency from the first receive frequency. A difference between a transmit frequency of a baseband signal sent by the first baseband unit of the first communication apparatus to the first TRP and a transmit frequency of a baseband signal sent by the second communication apparatus to the second TRP is related to the difference obtained by subtracting the second receive frequency from the first receive frequency. After receiving the baseband signals sent by the baseband units respectively connected to the first TRP and the second TRP, the first TRP and the second TRP may only need to convert the baseband signals into a radio frequency signal, and may not perform frequency adjustment, so as to ensure that a difference obtained by subtracting a downlink transmit frequency of the first TRP from a downlink transmit frequency of the second TRP is equal to the difference obtained by subtracting the second receive frequency from the first receive frequency.

For example, the first baseband unit sends a third baseband signal to the first TRP, where the third baseband signal is used by the first TRP to send the third downlink signal to the terminal device. For example, the first TRP may convert the third baseband signal into a radio frequency signal, that is, the third downlink signal, so as to send the third downlink signal to the terminal device.

The second baseband unit sends a second baseband signal to the second TRP, where the second baseband signal is used by the second TRP to send the second downlink signal to the terminal device. For example, the second TRP may convert the second baseband signal into a radio frequency signal, that is, the second downlink signal, so as to send the second downlink signal to the terminal device.

A difference obtained by subtracting a transmit frequency of the third baseband signal from a transmit frequency of the second baseband signal is equal to △f/k, where △f is the difference obtained by subtracting the first receive frequency from the second receive frequency.

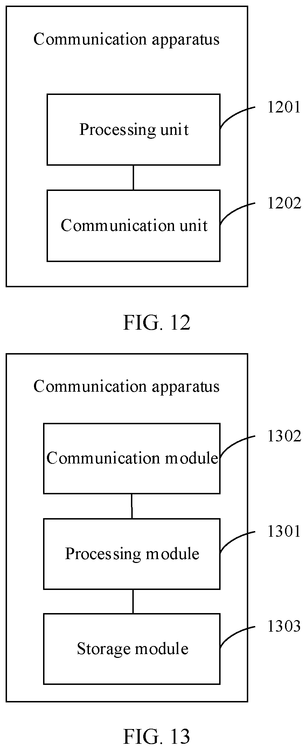

In a case that functional modules are obtained through division based on corresponding functions, FIG. 12 is a possible schematic diagram of a structure of the communication apparatus in the foregoing embodiments. The communication apparatus shown in FIG. 12 may be the communication apparatus described in embodiments of this application, or may be a component that implements the foregoing method in the communication apparatus. As shown in FIG. 12, the communication apparatus includes a processing unit 1201 and a communication unit 1202. The processing unit may be one or more processors, and the communication unit may be a transceiver.

The processing unit 1201 is configured to support the communication apparatus for internal processing, for example, calculating a difference between a second receive frequency and a first receive frequency, and/or is used in another process of the technology described in this specification.

The communication unit 1202 is configured to support communication between the communication apparatus and another communication apparatus, for example, support the communication apparatus in performing step 703, step 704, and/or another process of the technology described in this specification.

It should be noted that all related content of the steps in the foregoing method embodiments may be cited in function descriptions of corresponding functional modules. Details are not described herein again.

In a possible implementation, the communication apparatus shown in FIG. 12 may alternatively be a chip used in the communication apparatus. The chip may be a system-on-a-chip (system-on-a-chip, SoC), a baseband chip having a communication function, or the like.

The communication unit 1202 for receiving/sending may be an interface circuit of the apparatus, and is configured to read a baseband signal. For example, when the apparatus is implemented in a manner of a chip, the communication unit 1202 is an interface circuit that is of the chip and that is configured to read a baseband signal, or the communication unit 1202 is an interface circuit that is of the chip and that is configured to output a baseband signal.

For example, when an integrated unit is used, a schematic diagram of a structure of a communication apparatus according to an embodiment of this application is shown in FIG. 13. In FIG. 13, the communication apparatus includes a processing module 1301 and a communication module 1302. The processing module 1301 is configured to control and manage actions of the communication apparatus, for example, perform the step performed by the processing unit 1201, and/or another process of the technology described in this specification. The communication module 1302 is configured to perform the step performed by the communication unit 1202, and support interaction between the communication apparatus and another device, for example, interaction with another terminal apparatus. As shown in FIG. 13, the communication apparatus may further include a storage module 1303, and the storage module 1303 is configured to store program code and data of the communication apparatus.

When the processing module 1301 is a processor, the communication module 1302 is a transceiver, and the storage module 1303 is a memory, the communication apparatus is the communication apparatus shown in FIG. 8.

An embodiment of this application provides a computer-readable storage medium. The computer-readable storage medium stores instructions. The instructions are used to perform the methods shown in FIG. 9 to FIG. 11.

An embodiment of this application provides a computer program product including instructions. When the computer program product runs on a communication apparatus, the communication apparatus is enabled to perform the methods shown in FIG. 9 to FIG. 11.

An embodiment of this application provides a wireless communication apparatus. The wireless communication apparatus stores instructions. When the wireless communication apparatus runs on the communication apparatuses shown in FIG. 8, FIG. 12, and FIG. 13, the communication apparatuses are enabled to perform the communication methods shown in FIG. 9 to FIG. 11. The wireless communication apparatus may be a chip or the like.

Based on the descriptions of the foregoing implementations, a person skilled in the art can clearly understand that, for ease and brevity of description, division into the foregoing functional modules is merely used as an example for illustration. In actual application, the foregoing functions can be allocated to different functional modules and implemented as required. In other words, an inner structure of an apparatus is divided into different functional modules to implement all or some of the functions described above.

In the several embodiments provided in this application, it may be understood that the disclosed database access apparatus and method may be implemented in other manners. For example, the described database access apparatus embodiments are merely examples. For example, the division into modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, and may be located in one place or may be distributed on different places. Some or all of the units may be selected based on an actual requirement to achieve the objectives of the solutions in embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor to perform all or some of the steps of the methods described in embodiments of this application. The foregoing storage medium includes various media that can store program code, such as a USB flash drive, a removable hard disk, a ROM, a RAM, a magnetic disk, or an optical disc.

The foregoing descriptions are only specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A signal frequency adjustment method, comprising:
sending, by a communication apparatus, a first downlink signal to a terminal device via a first transmission reception point TRP;
receiving, by the communication apparatus, an uplink signal from the terminal device via the first TRP, wherein a receive frequency of the uplink signal at the first TRP is a first receive frequency, and a transmit frequency of the uplink signal at the terminal device is determined based on a receive frequency of the first downlink signal at the terminal device;
receiving, by the communication apparatus, the uplink signal from the terminal device via a second TRP, wherein a receive frequency of the uplink signal at the second TRP is a second receive frequency;
sending, by the communication apparatus, a second downlink signal to the terminal device via the second TRP; and
sending, by the communication apparatus, a third downlink signal to the terminal device via the first TRP, wherein
a difference obtained by subtracting a transmit frequency of the third downlink signal at the first TRP from a transmit frequency of the second downlink signal at the second TRP is equal to △f/k, △f is equal to a difference obtained by subtracting the second receive frequency from the first receive frequency, and k is a ratio of an uplink center frequency to a downlink center frequency.

2. The method according to claim 1, wherein the transmit frequency of the third downlink signal at the first TRP is equal to a transmit frequency of the first downlink signal at the first TRP

3. The method according to claim 2, wherein the method further comprises:
determining the transmit frequency of the second downlink signal at the second TRP based on the difference obtained by subtracting the second receive frequency from the first receive frequency.

4. The method according to claim 2 or 3, wherein both the transmit frequency of the first downlink signal at the first TRP and the transmit frequency of the third downlink signal at the first TRP are f, and the transmit frequency of the second downlink signal at the second TRP is f+△f/k.

5. The method according to claim 4, wherein the method comprises:
sending △f/k to the second TRP, so that a transmit frequency of the third downlink signal at the second TRP is f+△f/k.

6. The method according to any one of claims 1 to 4, wherein the sending, by the communication apparatus, the third downlink signal to the terminal device via the first TRP comprises: sending, by the communication apparatus, a third baseband signal to the first TRP, wherein the third baseband signal is used by the first TRP to send the third downlink signal to the terminal device; and
the sending, by the communication apparatus, a second downlink signal to the terminal device via the second TRP comprises:
sending, by the communication apparatus, a second baseband signal to the second TRP, wherein the second baseband signal is used by the second TRP to send the second downlink signal to the terminal device, wherein
a difference obtained by subtracting a transmit frequency of the third baseband signal from a transmit frequency of the second baseband signal is equal to △f/k.

7. A communication apparatus, comprising:
a processing unit, configured to send a first downlink signal to a terminal device via a first transmission reception point TRP, wherein
the processing unit is further configured to: receive an uplink signal from the terminal device via the first TRP, wherein a receive frequency of the uplink signal at the first TRP is a first receive frequency; and receive the uplink signal from the terminal device via a second TRP, wherein a receive frequency of the uplink signal at the second TRP is a second receive frequency, and a transmit frequency of the uplink signal at the terminal device is determined based on a receive frequency of the first downlink signal at the terminal device; and
the processing unit is further configured to: send a second downlink signal to the terminal device via the second TRP, and send a third downlink signal to the terminal device via the first TRP, wherein a difference obtained by subtracting a transmit frequency of the third downlink signal at the first TRP from a transmit frequency of the second downlink signal at the second TRP is equal to △f/k, △f is equal to a difference obtained by subtracting the second receive frequency from the first receive frequency, and k is a ratio of an uplink center frequency to a downlink center frequency.

8. The communication apparatus according to claim 7, wherein the transmit frequency of the third downlink signal at the first TRP is equal to a transmit frequency of the first downlink signal at the first TRP

9. The communication apparatus according to claim 8, wherein the processing unit is further configured to determine the transmit frequency of the second downlink signal at the second TRP based on the difference obtained by subtracting the second receive frequency from the first receive frequency.

10. The communication apparatus according to claim 8 or 9, wherein both the transmit frequency of the first downlink signal at the first TRP and the transmit frequency of the third downlink signal at the first TRP are f, and the transmit frequency of the second downlink signal at the second TRP is f+△f/k.

11. The communication apparatus according to claim 10, further comprising a communication unit, wherein the communication unit is configured to send △f/k to the second TRP, so that a transmit frequency of the third downlink signal at the second TRP is f+△f/k.

12. The communication apparatus according to any one of claims 7 to 11, further comprising the communication unit, wherein
the communication unit is specifically configured to: send a third baseband signal to the first TRP, wherein the third baseband signal is used by the first TRP to send the third downlink signal to the terminal device; and send a second baseband signal to the second TRP, wherein the second baseband signal is used by the second TRP to send the second downlink signal to the terminal device, wherein
a difference obtained by subtracting a transmit frequency of the third baseband signal from a transmit frequency of the second baseband signal is equal to △f/k.

13. A communication apparatus, comprising at least one processor and a memory, wherein the at least one processor is coupled to the memory;
the memory is configured to store a computer program; and
the at least one processor is configured to execute the computer program stored in the memory, so that the apparatus performs the method according to any one of claims 1 to 6.

14. A computer-readable storage medium, wherein the computer-readable storage medium stores a computer program or instructions, and when the computer program or the instructions runs or run, the method according to any one of claims 1 to 6 is implemented.
